# EUROPEAN PATENT SPECIFICATION

(11) **EP 2 463 186 B1**
(45) Date of publication and mention of the grant of the patent: **24.07.2013**
(21) Application number: 11188691.7
(22) Date of filing: 10.11.2011
(51) Int. Cl.: B62J 17/02, B62K 11/10

(54) **Motorcycle**
Motorrad
Motocyclette

(30) Priority: 08.12.2010 JP 2010273814
(43) Date of publication of application: 13.06.2012
(73) Proprietor: Yamaha Hatsudoki Kabushiki Kaisha, Shizuoka-ken 438-8501 (JP)
(72) Inventor: Kitaura, Toshiaki, Shizuoka, 438-8501 (JP)
(74) Representative: Zimmermann, Tankred Klaus

(56) References cited:
- EP-A1- 2 289 788
- WO-A1-2010/013479
- US-A1- 2008 099 266

## Description

### BACKGROUND OF THE INVENTION

### Field of the Invention

The present invention relates to a motorcycle. More particularly, the present invention relates to the structure of a front portion of a motorcycle.

### Description of the Background Art

Scooter-type motorcycles are widely known. A scooter includes a footboard located forward of the seat. The rider can place his feet on the footboard and drive the vehicle in a relaxed position.

A front cover is disposed forward of the footboard. The front cover covers a front portion of the vehicle to prevent travel wind from directly impinging on the rider. A handle cover is attached to the top of the front portion of the scooter. The handle cover is disposed above the front cover. The handle cover partially covers the handlebars and can be rotated along with the handlebars as these are moved.

JP2007-283927A and JP2005-145202A disclose a scooter-type motorcycle.

The scooter disclosed in JP2007-283927A includes a headlight attached to the front cover. A headlight is not attached to the handle cover, resulting in a relatively compact handle cover.
WO 2010/013479 A1 discloses a scooter type vehicle comprising a vehicle body frame, a footboard, a fuel tank, and a fuel supply part. The vehicle body frame includes a head pipe, a front frame, left and right side frames. The footboard is disposed above the left and right side frames. The fuel tank is disposed below the footboard. A front part of the left side frame is largely inclined with respect to a center line of the vehicle perpendicular to a transverse direction of the vehicle than the right side frames, and is connected to the front frame in a higher position than the front part of the right side frames. Moreover, the fuel supply part is connected to the fuel tank further rearward of the front frame in a side view of the vehicle, below the left side frames, and between the right side frame and the left side frame in a plan view of the vehicle.

### SUMMARY OF THE INVENTION

It is an object of the present invention is to provide a motorcycle where discomforts due to air flow during travel can be minimized while satisfying a need for causing the direction of illumination of the headlight to follow the movement of the handlebar.

This object is achieved by a motorcycle according to claim 1.

A motorcycle in the present embodiment includes: a handlebar disposed in a front portion of a vehicle; a handle cover that covers the handlebar; a headlight attached to a center of the handle cover in a vehicle width direction; a seat disposed rearward of the handlebar on which a rider sits; and a footboard disposed between the handlebar and the seat on which the rider's feet are placed. The motorcycle of the present embodiment further includes a steering shaft extending downward from the handlebar and supporting the handlebar; and a frame that rotatably supports the steering shaft. A first cover covering the frame from a front and a second cover covering the frame from a rear are disposed forward of the footboard.

A rear end of the first cover is coupled with a front end of the second cover, the first cover including, in a side view, an upper portion extending forward and downward from below the handle cover and a lower portion extending rearward and downward from a bottom of the upper portion.

Given that an intersection between a horizontal line passing through a rear end of an upper edge of the second cover and a vertical line passing through the front end of the second cover is a first point, the first cover has a portion located forward of the first point.

A horizontal distance between a front end of the first cover and the front end of the second cover is larger than a horizontal distance between a rear end of the upper portion of the first cover and the front end of the second cover.

The handle cover includes a central portion covering a top of the headlight and a slope disposed outward of the central portion in the vehicle width direction and extending rearward and upward. A lower edge of the slope is located below a lowermost point of the headlight in a side view.

The front surface of the first cover is expanded forward, reducing the extent to which the headlight protrudes forward relative to the top of the first cover. Thus, air that has impinged on the first cover from the front and flows upward impinges on the handle cover with a smaller resistance. Further, air flow upward along the front surface of the first cover can be guided smoothly onto the slope. Accordingly, discomforts due to air flow during travel can be minimized while satisfying a need for causing the direction of illumination of the headlight to follow the movement of the handlebar.

Embodiments of the invention are advantageous because the headlight is attached to the handle cover. Contrary thereto, in the scooter disclosed in JP2007-283927A, the headlight is attached to the front cover such that the direction of illumination of the headlight is constant regardless of rotation of the handlebars. There is a need for causing the direction of illumination of the headlight to follow the movement of the handlebars.

Embodiments of the invention are advantageous because a discomfort to the rider due to impinging air flow is minimized. Contrary thereto the scooter disclosed in JP2005-145202A includes a headlight attached to the handle cover. The headlight changes direction as the handlebars are rotated such that the direction of illumination of the headlight advantageously moves consistently with the direction of the rotating handlebars. Further, since a headlight is not attached to the front cover, the front cover can be relatively compact. In the scooter disclosed in JP2005-145202A, the headlight is attached to the handle cover, allowing the direction of illumination of the headlight to follow the movement of the handlebars. However, since the headlight is attached to the handle cover, it is difficult to make a compact handle cover. An increased size of the handle cover results in increased resistance to air flow during travel, leading to reduced comfort.

Other features, elements, steps, characteristics and advantages of the present invention will become more apparent from the following detailed description of the preferred embodiments of the present invention with reference to the attached drawings, in which:

### BRIEF DESCRIPTION OF THE DRAWINGS

Fig. 1 is a left side view of a motorcycle according to the present embodiment;
Fig. 2 is a top view of the motorcycle according to the present embodiment;
Fig. 3 is a front view of the motorcycle according to the present embodiment;
Fig. 4 is a rear view of the motorcycle according to the present embodiment;
Fig. 5 is the left side view of a front portion of the vehicle;
Fig. 6 is a perspective view of the front portion of the vehicle;
Fig. 7 is a front view of a first center cover;
Fig. 8 is a front view of a second center cover; and
Fig. 9 is a left side cross section showing the structure inside the handle cover.

### DETAILED DESCRIPTION OF THE PREFERRED EMBODIMENTS

A scooter-type motorcycle includes a front cover in the front portion of the vehicle. A handle cover is disposed above the front cover. In a scooter-type motorcycle, a headlight may be attached to the front cover or the handle cover.

There is a need for causing the direction of illumination of the headlight to follow the direction of the rotating handlebars. To satisfy this need, the headlight must be attached to the handle cover, resulting in a relatively large handle cover. This increases resistance of air flow during travel.

To reduce resistance of air flow during travel, the headlight may be attached to the front cover, which results in a relatively large front cover. The inventor of the present application discovered that, while a larger front cover can decrease resistance of air flow during travel, a more compact handle cover may cause air flow during travel to impinge on the rider and thus reduce rider comfort.

Accordingly, the inventor of the present application came up with a structure in which the headlight is disposed in the center of the handle cover and slopes are provided to the left and right. The central portion of the handle cover in the vehicle width direction, where air flow toward the rider can be blocked most effectively, is larger than its other portions. On the other hand, slopes are provided on its left and right sides in the vehicle width direction to let resistance of air flow escape and to guide air flow to the left and right sides of the rider.

Advantageously, this will reduce resistance of air during travel while satisfying a need for causing the direction of illumination of the headlight to follow the movement of the handlebars, and minimizes discomforts to the rider due to impinging air flow.

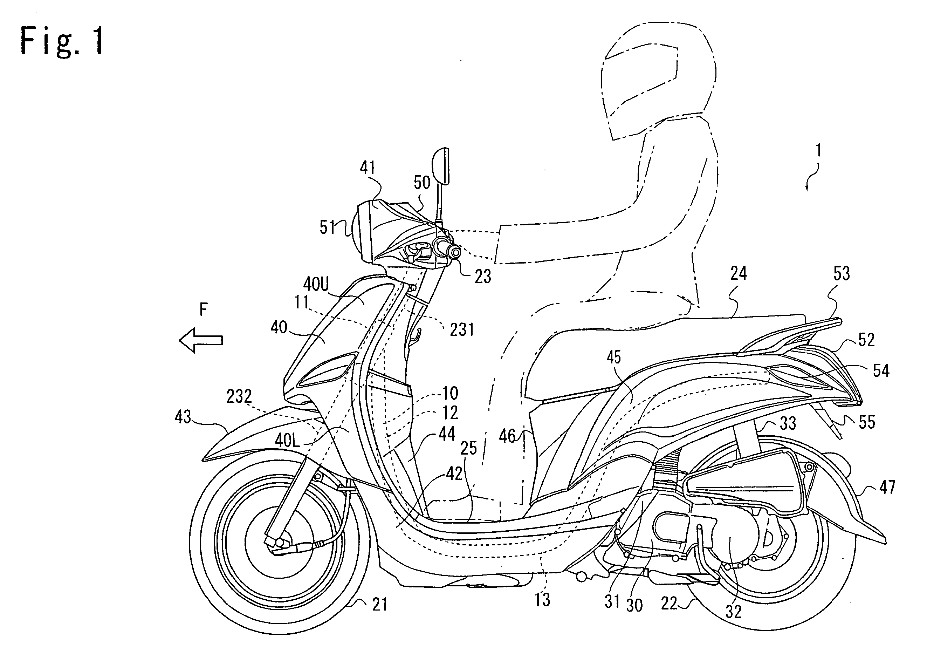

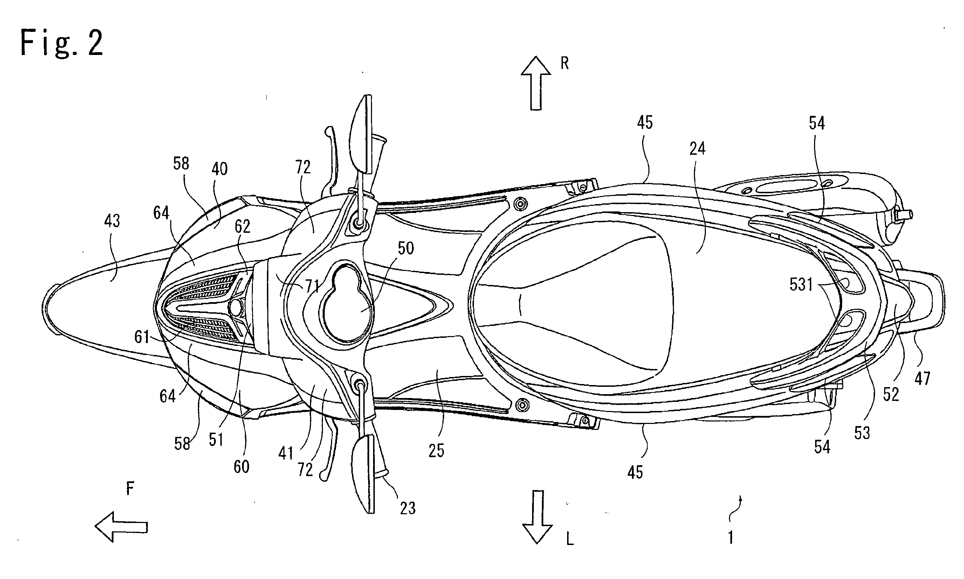

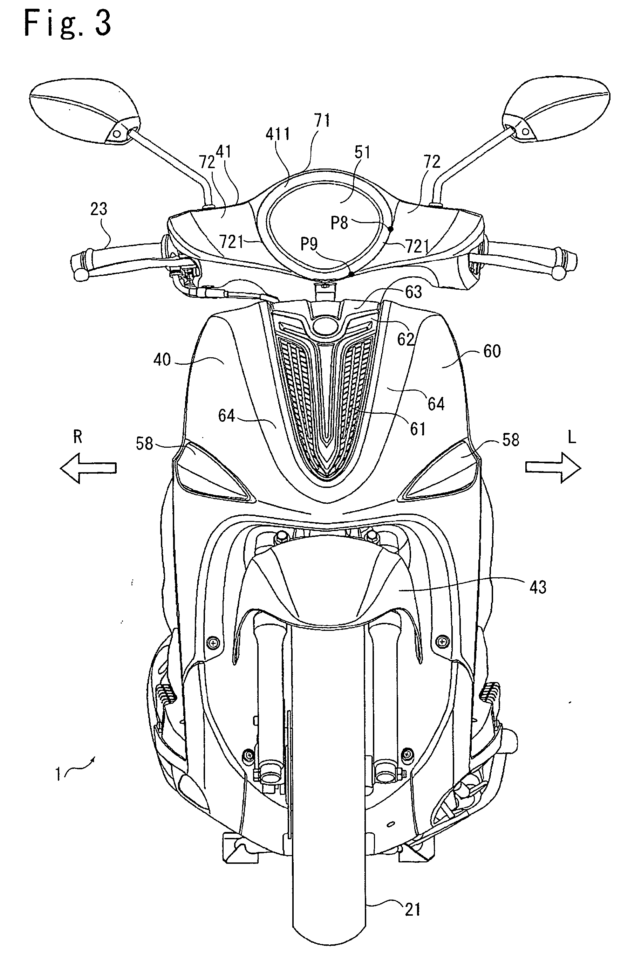

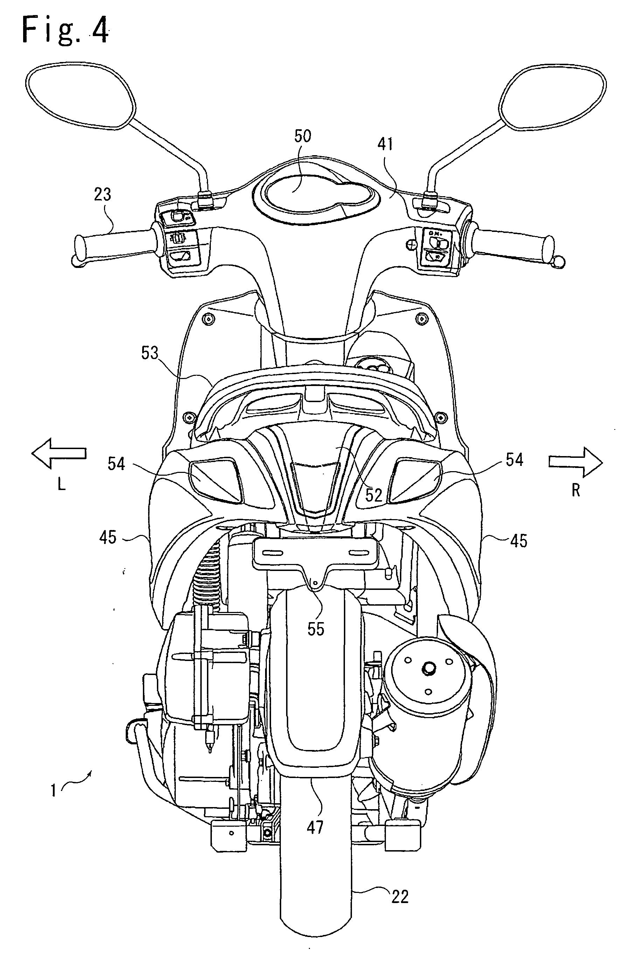

Now, embodiments of the present invention will be described referring to the drawings. Fig. 1 is a left side view of a motorcycle 1 according to the embodiment. The motorcycle 1 of the present embodiment is a so-called scooter-type motorcycle. Fig. 2 is a top view of the motorcycle 1. Fig. 3 is a front view of the motorcycle 1. Fig. 4 is a rear view of the motorcycle 1.

As used in the following description, directions such as forward/front, rear(ward), left or right refer to forward/front, rear(ward), left or right as viewed by a rider sitting on the seat of the motorcycle 1. Arrow F in various drawings indicates the forward/front of the motorcycle 1, while arrows L and R indicate the left and right of the motorcycle 1, respectively. Center, out(ward) and in(ward) in the vehicle width direction, as used herein, are defined with respect to the center of the vehicle width.

As shown in Fig. 1, the motorcycle 1 includes a frame 10 that supports the vehicle body. The motorcycle 1 includes a front wheel 21, a rear wheel 22, handlebars 23, a seat 24 and a footboard 25. The motorcycle 1 includes a power unit 30 swingably supported by frame 10.

The frame 10 includes a head pipe 11. The head pipe 11 is disposed in a front portion of the vehicle body. A steering shaft 231 is rotatably inserted into the head pipe 11. The handlebars 23 are supported on the top end of the steering shaft 231. Left and right frames of a front fork 232 are attached to left and right portions of the steering shaft 231. The front wheel 21 is rotatably supported on the lower ends of the front fork frames 232.

A front frame 12 is coupled with a rear portion of the head pipe 11. The front frame 12 extends rearward and downward. Left and right side frames 13 are coupled with the lower end of the front frame 12. The left and right side frames 13 extend rearward below the footboard 25. The side frames 13 further extend rearward and upward. The side frames 13 extend to a position near the top of the rear wheel 22.

The power unit 30 is supported by the side frames 13. The power unit 30 is disposed on the left side of the vehicle. The power unit 30 is supported by the side frames 13 at its front portion and vertically swingable with respect to the supported point. The rear wheel 22 is rotatably supported rearward of the power unit 30. Thus, the power unit 30 is vertically swingable together with the rear wheel 22.

A rear cushion unit 33 is provided between the power unit 30 and the side frames 13. The rear cushion unit 33 achieves elastic movements of the rear wheel 22 that swings vertically. Thus, impacts from a contact between the rear wheel 22 and the road surface can be absorbed.

The power unit 30 includes an engine 31 in its front portion. The power unit 30 includes a transmission unit 32 in its rear portion. A rotational driving force output from the engine 31 is transmitted to the rear wheel 22 via the transmission unit 32. A belt-type continuously variable speed transmission, for example, is contained in the transmission unit 32.

A front portion of the head pipe 11 is covered with a front cover 40. The front cover 40 corresponds to the "first cover" of the present invention. As shown in Fig. 2, a handle cover 41 is disposed above the front cover 40. The handle cover 41 covers the handlebars 23. A meter panel 50 that displays a speedometer and a fuel gauge is disposed in a rear portion of the handle cover 41.

As shown in Fig. 3, a headlight 51 is disposed generally at the center of the front portion of the handle cover 41. The handle cover 41 extends to the left and right from the position of the headlight 51. The handlebars 23 are disposed inside the handle cover 41. The grips of the handlebars 23 are exposed from the left and right ends of the handle cover 41 to the outside of the cover.

Returning to Fig. 1, an inner fender 42 is attached below the front cover 40. The inner fender 42 covers a rear portion of the front wheel 21. A front fender 43 is disposed above the front wheel 21.

An inner cover 44 is disposed rearward of the front cover 40 and the inner fender 42. The front edge of the inner cover 44 is coupled with the rear edge of the front cover 40. The front frame 12 is disposed between the front cover 40 and the inner cover 44, which join together, the former in the front and the latter in the rear. The inner cover 44 corresponds to the "second cover" of the present invention.

The footboard 25 is a platform on which the rider can put his legs. The rider can drive the motorcycle 1 in a relaxed position while putting his legs on the footboard 25. As shown in Fig. 2, the footboard 25 is disposed forward and downward of the seat 24. The footboard 25 is coupled with the lower edge of the inner cover 44.

As shown in Fig. 1, each of the side covers 45 extends downward from the lower edge of the seat 24. The side covers 45 cover an area from near the rear end of the footboard 25 to near the rear end of the vehicle.

A foot cover 46 is attached below a front portion of the seat 24. The foot cover 46 extends downward from the front portion of the seat 24 and covers an area between the seat 24 and the rear end of the footboard 25.

The side covers 45 are supported by the side frames 13. The lower edge of each of the side covers 45 extends rearward and upward above the rear wheel 22. A vertical interspace is provided between the bottom edge of the side covers 45 and the rear wheel 22 to allow the rear wheel 22 and the power unit 30 to swing vertically. A rear fender 47 is attached above the rear wheel 22. The rear fender 47 is attached to an upper portion of the power unit 30 and is vertically swingable together with the rear wheel 22.

As shown in Fig. 4, the taillight unit 52 is disposed on rear portions of the side covers 45. The taillight unit 52 is located at the center of, and the rear end of, the vehicle. The taillight unit 52 is sandwiched by the rear ends of the left and right side covers 45. A flasher 54 is disposed on each side of the taillight unit 52. Each flasher 54 serves as a direction indicator lamp. A rear bar 53 attached to the side covers 45 is disposed above the taillight unit 52. The motorcycle 1 in the present embodiment is a vehicle built for two passengers. A tandem rider sitting on the rear portion of the seat 24 can grip the rear bar 53 during travel.

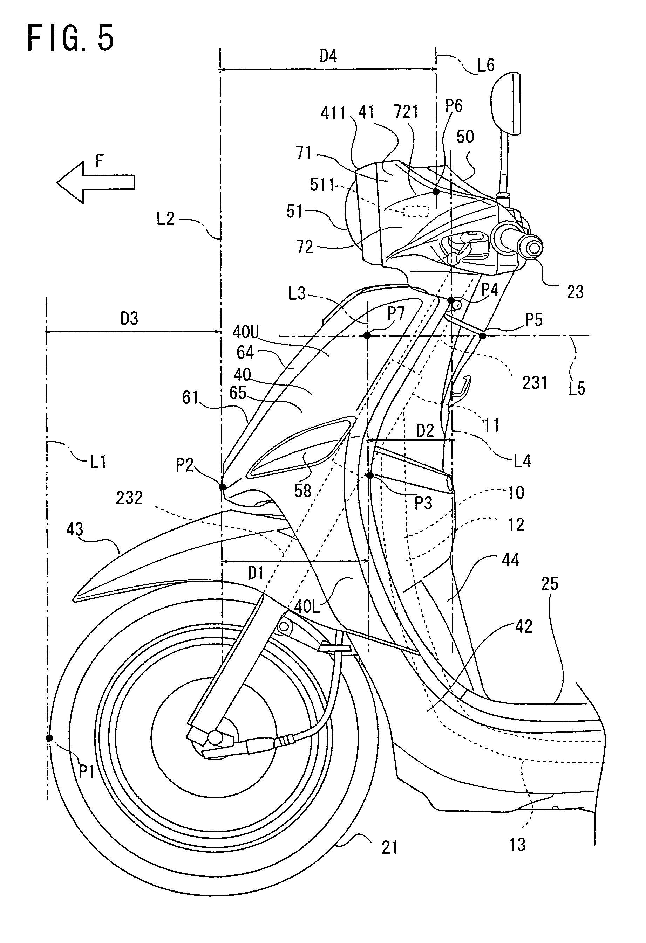

Fig. 5 is a left side view illustrating the structure of the front portion of the motorcycle 1. As discussed above, the front cover 40 is disposed in the front portion of the vehicle. In a side view, the front cover 40 is in a crescent shape with its expanded portion toward the front. That is, its central portion in the vertical direction is expanded forward, and the top and bottom in the vertical direction protrude rearward. More specifically, in a side view, the front cover 40 includes an upper portion 40U extending forward and downward from below the handle cover 41 and a lower portion 40L extending rearward and downward from the lower end of the upper portion 40U.

In a side view, the front edge of the front cover 40 is generally L-shaped and its central portion protrudes forward. In a side view, the rear edge of the front cover 40 is curved with its central portion expanded forward. In a side view, the front edge of the inner cover 44 is curved with its central portion expanded forward to lie along the rear edge of the front cover 40. The rear edge of the front cover 40 and the front edge of the inner cover 44 join together to cover the head pipe 11, the front frame 12 and other components from the front and the rear.

In Fig. 5, point P1 is the most forward point of the front wheel. Line L1 is a vertical line passing through the most forward point of the front wheel. Point P2 is the most forward point of the front cover 40. Line L2 is a vertical line passing through the most forward point of the front cover 40. Point P3 is the most forward point of the inner cover 44. Point P3 is also the most forward point of the rear edge line of the front cover 40. Line L3 is a vertical line passing through the front edge of the inner cover 44. Point P4 is the rear end of the upper edge of the front cover 40. Line L4 is a vertical line passing through the rear end of the upper edge of the front cover 40. Point P5 is the rear end of the upper edge of the inner cover 44. Line L5 is a horizontal line passing through the rear end of the upper edge of the inner cover 44.

Distance D1 is the distance between line L2 and line L3. Distance D2 is the distance between line L3 and line L4. As shown in Fig. 5, in the present embodiment, the relationship between distance D1 and distance D2 is described by D1 > D2. In other words, the degree of expansion of the front portion of the front cover 40 (i.e. the degree of protrusion toward the front F) is larger than the degree of recess of the rear portion of the front cover 40 (i.e. the degree of recess toward the front F). Thus, in the present embodiment, the front cover 40 has a relatively large front portion.

Such a configuration results in a front cover 40 with front and rear portions generally at their center in the vertical direction curved forward, where the central portions in the vertical direction are expanded in the front-rear direction. Thus, air flow during travel from the front toward the front cover 40 can be effectively guided upward, thereby reducing resistance to air flow.

0045] Supposing that the intersection between line L3 and line L5 is point P7, the front cover 40 has a portion located forward of point P7. Thus, the upper portion of the front cover 40 is slightly expanded toward the front F. The headlight 51 is disposed above the front cover 40. The headlight 51 is disposed forward of the handlebars 23. If the front portion of the headlight 51 significantly protrudes toward the front F relative to the front portion of the upper portion of the front cover 40, it will cause a large resistance to air flow impinging on the front cover 40 and moving upward. However, as discussed above, the upper portion of the front cover 40 is expanded toward the front F, thereby reducing resistance to air flow moving toward the headlight 51.

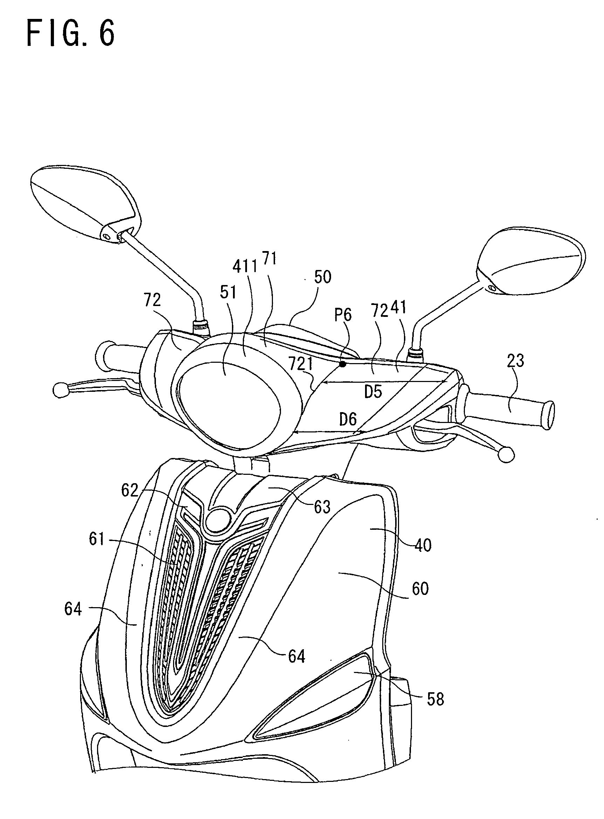

Fig. 6 is a perspective view of the front portion of the motorcycle 1. As shown in Fig. 6, the handle cover 41 includes a central portion 71 covering the top of the headlight 51. The handle cover 41 includes left and right slopes 72 that expand to the left and right of the central portion 71. As shown in Fig. 5, the front surface of the front cover 40 and the slopes 72 form a generally continuous slope and is configured to reduce resistance of air flow that impinges on the front cover 40 and moves upward.

As discussed above, as shown in Fig. 5, the front cover 40 has a portion located forward of point P7. That is, the upper portion of the front cover 40 is expanded toward the front F such that the front surface of the upper portion of the front cover 40 and the slopes 72 form a continuous surface.

As shown in Fig. 5, distance D3 is the distance between line L1 and line L2. Distance D4 is the distance between line L2 and line L6. Line L6 is a vertical line passing through point P6. Point P6 is the uppermost point of a borderline 721. The borderline 721 is a borderline between the central portion 71 and a slope 72. That is, point P6 is the uppermost point of air flow guided outward along a slope 72 in the vehicle width direction.

In the present embodiment, the relationship between distance D3 and distance D4 is described by D3 < D4. Thus, the route surface for air flow during travel, which is formed of the front surface of the front cover 40 and the slopes 72 of the handle cover 41, is relatively long in the front-rear direction of the vehicle. On the other hand, the front fender 43 protruding forward from the front cover 40 is relatively short. Thus, air that impinges on the motorcycle from the front can flow smoothly upward without staying around the top of the front fender 43. Air during travel that moves along the front cover 40 toward the slopes 72 can flow smoothly.

Further, as shown in Fig. 6, each slope 72 forms a surface that is expanded outward in the vehicle width direction. That is, as shown in Fig. 3, the borderlines 721 between the respective slopes 72 and the central portion 71 extend outward in the vehicle width direction. Thus, air flow during travel along the front cover 40 toward the slopes 72 is guided to the left and right sides of the rider sitting on the seat 24 without impinging on the rider.

Moreover, as shown in Fig. 5, in a side view, the slopes 72 are located rearward of line L3. That is, the slopes 72 are disposed rearward of the most forward point of the inner cover 44. This reduces resistance of the handle cover 41 to air flow that moves upward along the front surface of the front cover 40.

Further, as shown in Fig. 6, the width of the upper portion of a slope 72, D5, is larger than the width of the lower portion, D6. Specifically, the width of a slope 72 in the vehicle width direction is smallest at the lowermost area of the slope 72 and gradually increases toward the top. Thus, air flow along the slope 72 is guided to the left and right sides of the rider while being dispersed to the left and right. This will reduce resistance of air flow during travel to the rider.

Further, as shown in Fig. 3, point P9, which is the lowermost point of a slope 72, is located inward of point P8, which is the outermost point of the headlight 51 in the vehicle width direction. Even when air flow upward along the front surface of the front cover 40 passes near the center of the vehicle width, air flow can be directed to outer portions of the vehicle width. This will more effectively reduce resistance of air during travel to the rider.

As shown in Fig. 6, the front cover 40 includes a main cover 60, a first center cover 61, a second center cover 62 and an upper cover 63. The upper cover 63 is integrally formed with the main cover 60. The first center cover 61 and the second center cover 62 constitute a center cover.

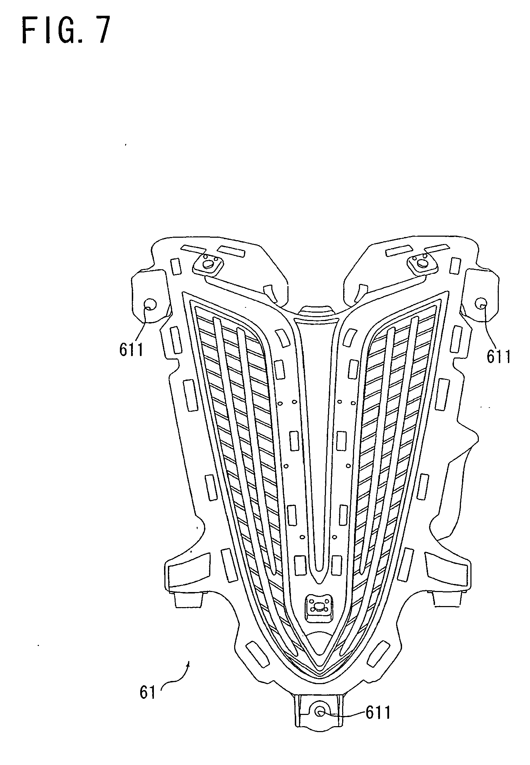

Fig. 7 shows the first center cover 61. As shown, the first center cover 61 has widths in the left-right direction that increase from the bottom toward the top. The first center cover 61 has bolt holes 611, two at the top and one at the bottom.

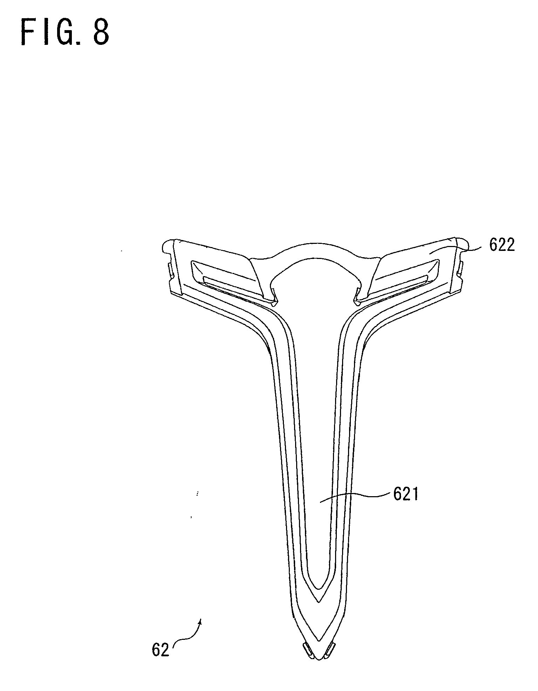

Fig. 8 shows the second center cover 62. As shown, the second center cover 62 is generally T-shaped. A first portion 621 of the second center cover 62, which extends from top to bottom, reinforces the first center cover 61. A second portion 622 of the second center cover 62, which extends in the vehicle width direction, is partially covered by the upper cover 63.

An assembly of the front cover 40 will now be described. First, a center cover is assembled by attaching a second center cover 62 to the front surface of the first center cover 61. The center cover is then attached to the back surface of a main cover 60, which is integrally formed with an upper cover 63, and fixed by means of bolts. The bolts are inserted into the three bolt holes 611 of the first center cover 61 and the corresponding bolt holes of the main cover 60, not shown.

As shown in Fig. 6, the front cover 40 has a groove 64 that encompasses the first center cover 61 from the right, left and bottom. The groove 64 extends upward on the left and right sides of the first center cover 61. The groove 64 is concave toward the rear of the vehicle body.

As discussed above, the first center cover 61 has widths in the vehicle width direction that increase from the bottom toward the top. Accordingly, the groove 64 sections on the left and right sides extend upward as they are spread outward in the vehicle width direction. Thus, air flow during travel that impinges on the front cover 40 is guided along the groove 64 and moves upward while being dispersed to the left and right. Since air flow during travel moves upward along the front surface of the front cover 40 while being dispersed to the left and right, air flow that has been lifted along the front surface of the front cover 40 is guided onto the slopes 72 without impinging on the headlight 51. Resistance of air impinging on the headlight 51 can thus be reduced. As shown in Figs. 3 and 6, the positions of the left and right slopes 72 overlap those of the left and right sections of the groove 64 in the vehicle width direction. Thus, air flow that has been lifted along the front surface of the slopes 72 can be smoothly guided onto the slopes 72.

Using the groove 64 and the slopes 72 to direct air flow during travel outward in the vehicle width direction will prevent air flow from impinging on the rider. Further, forming a groove 64 in the front cover 40 will increase the rigidity of the front cover 40. As discussed above, the front cover 40 is expanded toward the front, and its size in the vertical direction is relatively large; its strength will be improved by forming the groove 64.

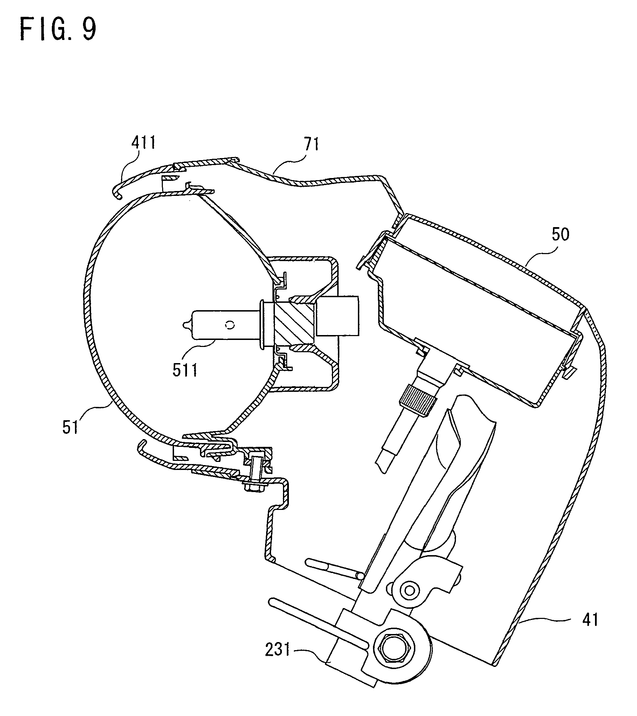

Fig. 9 is a side cross section showing the structure inside the handle cover 41. As shown, a headlight 51 is attached inside the handle cover 41 in its front area. The headlight 51 includes a light bulb 511 in its inside.

As shown, the most forward point of the headlight 51 is located forward of the handle cover 41. The headlight 51 includes a lens and a reflector, and the handle cover 41 covers the periphery of the lens. The handle cover 41 includes a ring 411 attached to the periphery of the headlight 51.

In the handle cover 41, a meter panel 50 is attached rearward of the headlight 51. A steering shaft 231 is inserted into the handle cover 41 below the meter panel 50. The handle cover 41 is rotated together with the steering shaft 231 and the handlebars 23.

As shown in Fig. 5, the front edge of a slope 72 is located forward of the light bulb 511 of the headlight 51. Thus, on the left and right sides of the headlight 51 where air flows during travel, a slope 72 almost reaches the front edge of the handle cover 41. Thus, air that has been lifted along the front surface of the front cover 40 effectively flows onto the slopes 72. Further, in a side view, the lower edge of a slope 72 is located below the lowermost point of the headlight 51. Thus, air flow from below can be more effectively guided to the left and right sides of the rider.

As shown in Fig. 5, in the present embodiment, a flasher 58 is attached to the front cover 40. The flasher 58 serves as a direction indicator.

The flasher 58 is located lower than the midpoint of point P3, which is the most forward point of the inner cover 44, and intersection P7. In the present embodiment, the flasher 58 is located generally at the same level in the vertical direction as point P3, which is the most forward point of the inner cover 44. Thus, the flasher 58 does not cause resistance to air flow upward along the front surface of the front cover 40.

A motorcycle 1 of the present embodiment includes handlebars 23, a handle cover 41 that covers the handlebars 23, a headlight 51 attached to the center of the handle cover 41 in the vehicle width direction, a seat 24 disposed rearward of the handlebars 23, and a footboard 25 disposed between the handlebars 23 and the seat 24. The motorcycle 1 also includes a steering shaft 231 supporting the handlebars 23 and a frame 10 rotatably supporting the steering shaft 231. The front cover 40 covers the frame 10 from the front, while the inner cover 44 covers the frame 10 from the rear.

In a side view, the front cover 40 is in a crescent shape. That is, in a side view, the front cover 40 includes an upper portion 40U extending forward and downward from below the handle cover 41, and a lower portion 40L extending rearward and downward from the lower end of the upper portion 40U.

Supposing that the intersection of a horizontal line L5, which passes through point P5 which is the rear end of the upper edge of the inner cover 44, and a vertical line L3, which passes through point P3 which is the most forward point of the inner cover 44, is point P7, then the front cover 40 has a portion located forward of point P7.

Horizontal distance D1 between point P2 which is the most forward point of the front cover 40 and point P3 which is the most forward point of the inner cover 44 is larger than horizontal distance D2 between point P4 which is the rear end of the upper edge of the front cover 40 and point P3 which is the most forward point of the inner cover 44.

The handle cover 41 includes a central portion 71 that covers the top of the headlight 51 and slopes 72 disposed outward of the central portion 71 in the vehicle width direction, the slopes extending rearward and upward.

The front surface of the front cover 40 is expanded forward such that the headlight 51 protrudes forward from the upper portion of the front cover 40 to a smaller degree. Thus, air that has impinged on the front of the front cover 40 and flowed upward impinges on the handle cover 41 with a smaller resistance. Further, air that moves upward along the front surface of the front cover 40 is smoothly guided onto the slopes 72.

In the motorcycle 1 of the present embodiment, the slope 72 extends more outward in the vehicle width direction toward the rear. Air flowing along the slopes 72 is guided outward in the vehicle width direction, thereby preventing air flow during travel from impinging on the rider.

In the motorcycle 1 of the present embodiment, the slope 72 becomes wider in the vehicle width direction toward the rear. Resistance of air flow to the rider will thus be reduced.

In the motorcycle 1 of the present embodiment, a front edge of the slope 72 is located rearward of point P3, which is the most forward point of the inner cover 44. Air that flows upward along the front surface of the front cover 40 flows onto the slopes 72 with a smaller resistance. Further, the slopes 72 have portions located forward of point P4. Thus, air that flows upward along the front surface of the front cover 40 flows onto the slopes 72 with a yet smaller resistance.

In the motorcycle 1 of the present embodiment, a front fender 43 covers the front wheel from above and is rotated together with the handlebar 23. The front fender 43 is separate from the front cover 40 such that lower portions of the front cover 40 can be smaller.

In the motorcycle 1 of the present embodiment, a first center cover 61, which is separate from the main cover 60, is attached to the front surface of the front cover 40. The front cover 40 bulges forward, which results in a relatively large front cover 40; however, a rigidity of the front cover 40 can be maintained by attaching the first center cover 61.

In the motorcycle 1 of the present embodiment, the first center cover 61 has an upper portion wider than lower a portion in the vehicle width direction, and a groove 64 that is concave rearward is provided outward of the first center cover 61 in the vehicle width direction. In a front view, the groove 64 extends outward and upward on the front surface of the front cover 40. Travel wind impinging on the front cover 40 is guided outward in the vehicle width direction via the groove 64. Air that moves upward along the front surface of the front cover 40 is effectively guided onto the slopes 72. Air flow upward along the front surface of the front cover 40 will be prevented from impinging on the rider.

In the motorcycle 1 of the present embodiment, a flasher 58 is attached to the front cover 40. The flasher 58 is disposed lower than a midpoint of point P3, which is the most forward point of the inner cover 44, and intersection P7. The flasher 58 is disposed near the level of point P3, which is the most forward point of the inner cover 44, in the vertical direction. The flasher causes no resistance to air flowing upward along the front surface of the front cover 40.

In the motorcycle 1 of the present embodiment, point P9, which is the lowermost point of the slope 72, is located inward of point P8, which is an outermost point of the headlight 51 in the vehicle width direction. Air that flows upward along the front surface of the front cover 40 can be guided outward in the vehicle width direction even when it flows near the center of the vehicle width.

In the present embodiment, the front cover 40 is divided into a main cover 60, a first center cover 61 and a second center cover 62. However, the front cover 40 may be undividable and be composed of one cover. The manner in which it is divided is not limited to the above embodiment. The number of parts into which the cover is divided and the assembly are not limited to the above embodiment, either. The main cover may be divided into an upper part and a lower part.

As used in the present embodiment, "edge", "end" or "most ... point" in front edge/end, most forward point, rear edge/end, upper edge/end, lower edge/end, lowermost point and the like mean an "edge", "end" or "most ... point" of a portion that is visible from outside of the motorcycle. For example, if two covers join together, one in the front and the other in the rear, then, a rear portion of one cover may overlap a front portion of the other cover in a side view. If this is the case, the front end/edge, most forward point or rear end/edge of each cover is the front edge/end, most forward point or the rear edge/end of the portions that are visible from outside.

While preferred embodiments of the present invention have been described above, it is to be understood that variations and modifications will be apparent to those skilled in the art without departing the scope of the present invention. The scope of the present invention, therefore, is to be determined solely by the following claims.

## Claims

1. A motorcycle comprising:
a handlebar (23) disposed in a front portion of a vehicle;
a handle cover (41) that covers the handlebar (23);
a headlight (51) attached to a center of the handle cover (41) as viewed in a vehicle width direction;
a seat (24) disposed rearward of the handlebar (23) on which a rider sits;
a footboard (25) disposed between the handlebar (23) and the seat (24) on which the rider's feet are placed;
a steering shaft (231) extending downward from the handlebar (23) and supporting the handlebar (23);
a frame (10) that rotatably supports the steering shaft (231);
a first cover (40) disposed forward of the footboard (25) in a front-rear direction and covering the frame (10) from a front; and
a second cover (44) extending forward from the footboard (25) and covering the frame (10) from a rear,
wherein a rear end of the first cover (40) is coupled with a front end of the second cover (44), the first cover (40) including, in a side view, an upper portion (40U) extending forward and downward from below the handle cover (41) and a lower portion (40L) extending rearward and downward from a bottom of the upper portion (40U), and
given that an intersection between a horizontal line (L5) passing through a rear end (P5) of an upper edge of the second cover (44) and a vertical line (L3) passing through the front end (P3) of the second cover (44) is a first point (P7), the first cover (40) has a portion located forward of the first point (P7), and
a horizontal distance (D1) between a front end (P2) of the first cover (40) and the front end (P3) of the second cover (44) is larger than a horizontal distance (D2) between a rear end (P4) of the upper portion (40U) of the first cover (40) and the front end (P3) of the second cover (44), and
the handle cover (41) includes:
a central portion (71) covering a top of the headlight (51); and
a slope (72) disposed outward of the central portion (71) in the vehicle width direction and extending rearward and upward,
**characterized in that** a lower edge of the slope (72) is located below a lowermost point of the headlight (51) in a side view.

2. The motorcycle according to claim 1, wherein the slope (72) extends more outward in the vehicle width direction toward the rear.

3. The motorcycle according to claim 1 or 2, wherein the slope (72) becomes wider in the vehicle width direction toward the rear.

4. The motorcycle according to any one of claims 1 to 3, wherein a front edge of the slope (72) is located rearward of the front end of the second cover (44).

5. The motorcycle according to any one of claims 1 to 4, further comprising:
a mud cover (43) that covers the front wheel (21) from above and is rotated together with the handlebar (23).

6. The motorcycle according to any one of claims 1 to 5, wherein
the first cover (40) includes a separate cover disposed forward of the first cover (40).

7. The motorcycle according to claim 6, wherein
the separate cover has an upper portion wider than a lower portion (40L) in the vehicle width direction, and a groove (64) that is concave rearward is provided outward of the separate cover in the vehicle width direction, and
the groove (64) extends outward and upward on a front surface of the first cover (40) in a front view.

8. The motorcycle according to any one of claims 1 to 7, further comprising:
a flasher (58) attached to the first cover (40),
wherein the flasher (58) is disposed lower than a midpoint of the front end (P3) of the second cover (44) and the first point (P7).

9. The motorcycle according to any one of claims 1 to 8, wherein
the lowermost point of the slope (72) is located inward of an outermost point of the headlight (51) in the vehicle width direction.

## Patentansprüche

1. Ein Motorrad mit folgenden Merkmalen:
einem Lenker (23), der an einem vorderen Abschnitt eines Fahrzeugs angeordnet ist;
einer Lenkerabdeckung (41), die den Lenker (23) bedeckt;
einem Scheinwerfer (51), der an einer Mitte der Lenkerabdeckung (41), betrachtet in einer Fahrzeugbreitenrichtung, angebracht ist;
einem Sitz (24), der rückwärtig von dem Lenker (23) angeordnet ist, auf dem ein Fahrer sitzt;
einem Trittbrett (25), das zwischen dem Lenker (23) und dem Sitz (24) angeordnet ist, auf dem die Füße des Fahrers platziert werden;
einer Lenkwelle (231), die sich von dem Lenker (23) nach unten erstreckt und den Lenker (23) trägt;
einem Rahmen (10), der die Lenkwelle (231) drehbar trägt;
einer ersten Abdeckung (40), die in einer Vorne-Hinten-Richtung vor dem Trittbrett (25) angeordnet ist und den Rahmen (10) von einer Vorderseite bedeckt; und
einer zweiten Abdeckung (44), die sich von dem Trittbrett (25) nach vorne erstreckt und den Rahmen (10) von einer Rückseite bedeckt,
wobei ein hinteres Ende der ersten Abdeckung (40) mit einem vorderen Ende der zweiten Abdeckung (44) gekoppelt ist, wobei die erste Abdeckung (40) in einer Seitenansicht einen oberen Abschnitt (40U), der sich von unterhalb der Lenkerabdeckung (41) nach vorne und nach unten erstreckt, und einen unteren Abschnitt (40L), der sich von einer Unterseite des oberen Abschnitts (40U) nach hinten und nach unten erstreckt, umfasst, und
unter der Annahme, dass ein Schnittpunkt zwischen einer horizontalen Linie (L5), die durch ein hinteres Ende (P5) eines oberen Randes der zweiten Abdeckung (44) verläuft, und einer vertikalen Linie (L3), die durch das vordere Ende (P3) der zweiten Abdeckung (44) verläuft, ein erster Punkt (P7) ist, die erste Abdeckung (40) einen Abschnitt aufweist, der sich vor dem ersten Punkt (P7) befindet, und
eine horizontale Entfernung (D1) zwischen einem vorderen Ende (P2) der ersten Abdeckung (40) und dem vorderen Ende (P3) der zweiten Abdeckung (44) größer ist als eine horizontale Entfernung (D2) zwischen einem hinteren Ende (P4) des oberen Abschnitts (40U) der ersten Abdeckung (40) und dem vorderen Ende (P3) der zweiten Abdeckung (44), und
die Lenkerabdeckung (41) folgende Merkmale umfasst:
einen Mittelabschnitt (71), der eine Oberseite des Scheinwerfers (51) bedeckt; und
eine Flanke (72), die von dem Mittelabschnitt (71) in der Fahrzeugbreitenrichtung nach außen hin angeordnet ist und sich nach hinten und nach oben erstreckt,
**dadurch gekennzeichnet, dass** sich ein unterer Rand der Flanke (72) in einer Seitenansicht unter einem untersten Punkt des Scheinwerfers (51) befindet.

2. Das Motorrad gemäß Anspruch 1, bei dem sich die Flanke (72) in der Fahrzeugbreitenrichtung in Richtung der Rückseite weiter nach außen erstreckt.

3. Das Motorrad gemäß Anspruch 1 oder 2, bei dem die Flanke (72) in der Fahrzeugbreitenrichtung in Richtung der Rückseite breiter wird.

4. Das Motorrad gemäß einem der Ansprüche 1 bis 3, bei dem sich ein vorderer Rand der Flanke (72) rückwärtig von dem vorderen Ende der zweiten Abdeckung (44) befindet.

5. Das Motorrad gemäß einem der Ansprüche 1 bis 4, das ferner folgendes Merkmal aufweist:
einen Schmutzschutz (43), der das Vorderrad (21) von oben bedeckt und sich zusammen mit dem Lenker (23) dreht.

6. Das Motorrad gemäß einem der Ansprüche 1 bis 5, bei dem:
die erste Abdeckung (40) eine separate Abdeckung umfasst, die vor der ersten Abdeckung (40) angeordnet ist.

7. Das Motorrad gemäß Anspruch 6, bei dem:
die separate Abdeckung einen oberen Abschnitt aufweist, der in der Fahrzeugbreitenrichtung breiter ist als ein unterer Abschnitt (40L), und eine Rille (64), die nach hinten hin konkav ist, in der Fahrzeugbreitenrichtung von der separaten Abdeckung nach außen hin vorgesehen ist, und
die Rille (64) sich in einer Draufsicht auf einer Vorderoberfläche der ersten Abdeckung (40) nach außen und nach oben erstreckt.

8. Das Motorrad gemäß einem der Ansprüche 1 bis 7, das ferner folgendes Merkmal aufweist:
einen Blinker (58), der an der ersten Abdeckung (40) angebracht ist,
wobei der Blinker (58) niedriger angeordnet ist als ein Mittelpunkt des vorderen Endes (P3) der zweiten Abdeckung (44) und des ersten Punkts (P7).

9. Das Motorrad gemäß einem der Ansprüche 1 bis 8, bei dem:
der unterste Punkt der Flanke (72) in der Fahrzeugbreitenrichtung von einem äußersten Punkt des Scheinwerfers (51) nach innen angeordnet ist.

## Revendications

1. Motocyclette comprenant:
un guidon (23) disposé dans une partie avant d'un véhicule;
un couvercle de guidon (41) qui recouvre le guidon (23);
un phare (51) fixé au centre du couvercle de guidon (41), vu dans le sens de la largeur du véhicule;
un siège (24) disposé à l'arrière du guidon (23), sur lequel s'assied un conducteur;
un marchepied (25) disposé entre le guidon (23) et le siège (24), sur lequel sont placés les pieds du conducteur;
un arbre de guidage (231) s'étendant vers le bas depuis le guidon (23) et supportant le guidon (23);
un bâti (10) qui supporte en rotation l'arbre de guidage (231);
un premier couvercle (40) disposé à l'avant du marchepied (25) dans le sens avant-arrière et recouvrant le bâti (10) depuis l'avant; et
un deuxième couvercle (44) s'étendant vers l'avant depuis le marchepied (25) et recouvrant le bâti (10) depuis l'arrière,
dans lequel une extrémité arrière du premier couvercle (40) est couplée à une extrémité avant du deuxième couvercle (44), le premier couvercle (40) comportant, en vue latérale, une partie supérieure (40U) s'étendant vers l'avant et vers le bas depuis le bas du couvercle de guidon (41) et une partie inférieure (40L) s'étendant vers l'arrière et vers le bas depuis le bas de la partie supérieure (40U), et
étant donné qu'une intersection entre une ligne horizontale (L5) passant par une extrémité arrière (P5) d'un bord supérieur du deuxième couvercle (44) et une ligne verticale (L3) passant par l'extrémité avant (P3) du deuxième couvercle (44) est un premier point (P7), le premier couvercle (40) présente une partie située à l'avant du premier point (P7), et
une distance horizontale (D1) entre une extrémité avant (P2) du premier couvercle (40) et l'extrémité avant (P3) du deuxième couvercle (44) est supérieure à une distance horizontale (D2) entre une extrémité arrière (P4) de la partie supérieure (40U) du premier couvercle (40) et l'extrémité arrière (P3) du deuxième couvercle (44), et
le couvercle de guidon (41) comporte:
une partie centrale (71) recouvrant le haut du phare (51); et
une partie inclinée (72) disposée vers l'extérieur de la partie centrale (71) dans le sens de la largeur du véhicule et s'étendant vers l'arrière et vers le haut,
**caractérisée par le fait qu'**un bord inférieur de la partie inclinée (72) est située au-dessous d'un point inférieur du phare (51), en vue latérale.

2. Motocyclette selon la revendication 1, dans laquelle la partie inclinée (72) s'étend plus vers l'extérieur dans le sens de la largeur du véhicule vers l'arrière.

3. Motocyclette selon la revendication 1 ou 2, dans laquelle la partie inclinée (72) dévient plus large dans le sens de la largeur du véhicule vers l'arrière.

4. Motocyclette selon l'une quelconque des revendications 1 à 3, dans laquelle un bord avant de la partie inclinée (72) est situé à l'arrière de l'extrémité avant du deuxième couvercle (44).

5. Motocyclette selon l'une quelconque des revendications 1 à 4, comprenant par ailleurs:
un garde-boue (43) qui recouvre la roue avant (21) depuis le haut et tourne ensemble avec le guidon (23).

6. Motocyclette selon l'une quelconque des revendications 1 à 5, dans laquelle
le premier couvercle (40) comporte un couvercle séparé disposé à l'avant du premier couvercle (40).

7. Motocyclette selon la revendication 6, dans laquelle
le couvercle séparé présente une partie supérieure plus large qu'une partie inférieure (40L) dans le sens de la largeur du véhicule, et une rainure (64) qui est concave vers l'arrière et prévue à l'extérieur du couvercle séparé dans le sens de la largeur du véhicule, et
la rainure (64) s'étend vers l'extérieur et vers le haut sur une surface avant du premier couvercle (40), en vue frontale.

8. Motocyclette selon l'une quelconque des revendications 1 à 7, comprenant par ailleurs:
un clignoteur (58) fixé au premier couvercle (40),
dans laquelle le clignoteur (58) est disposé plus bas qu'un point central de l'extrémité avant (P3) du deuxième couvercle (44) et du premier point (P7).

9. Motocyclette selon l'une quelconque des revendications 1 à 8, dans laquelle
le point inférieur de la partie inclinée (72) est situé à l'intérieur par rapport au point extérieur du phare (51) dans le sens de la largeur du véhicule.
